# FASCICULE DE BREVET EUROPEEN

(11) **EP 1 137 551 B1**
(45) Date de publication et mention de la délivrance du brevet: **28.08.2002**
(21) Numéro de dépôt: 99959471.6
(22) Date de dépôt: 10.12.1999
(51) Int. Cl.: B60C 23/04

(54) **MODULE DE MESURE DE PRESSION DE PNEUMATIQUE**
REIFENDRUCKMESSMODUL
MODULE FOR MEASURING TYRE PRESSURE

(30) Priorité: 11.12.1998 FR 9815665
(43) Date de publication de la demande: 04.10.2001
(73) Titulaire: SAGEM SA, 75116 Paris (FR)
(72) Inventeur: DELAPORTE, Françis, F-95520 Osny (FR)
(74) Mandataire: Bloch, Gérard
(86) Numéro de dépôt international: FR9903083
(87) Numéro de publication internationale: WO00035685

(56) Documents cités:
- US-A- 4 734 674

## Description

L'invention concerne un module de mesure de pression de pneumatique, notamment utilisé pour mesurer la pression de l'air à l'intérieur d'un pneumatique de véhicule automobile afin de signaler au conducteur un dégonflage, ou un surgonflage, dangereux du pneumatique.

US 4 734 674 A montre un tel module selon la préambule de la revendication 1.

Généralement, le module de mesure de pression est fixé sur la jante du pneumatique et comprend, dans un boîtier, un capteur de pression avec une entrée d'air, une carte support de circuit imprimé, sur laquelle est monté le capteur, et une cheminée de communication entre l'entrée d'air du capteur et l'intérieur du pneumatique, tous ces éléments étant noyés dans une résine d'enrobage et de protection, anti-vibration. Le capteur et la cheminée sont tous deux en appui contre la carte support de circuit imprimé, de part et d'autre de celle-ci, au droit d'une ouverture traversant la carte.

Le module de mesure de pression est exposé à des agressions environnementales causées par la pluie, le savon, les poussières, les particules de carbone et surtout les produits anti-crevaison. Tous ces agents risquent de polluer, voire d'obstruer, l'entrée d'air du capteur de pression et, par conséquent d'endommager le capteur. En particulier, les produits anti-crevaison, généralement à base de silicone, sont injectés sous forme liquide à l'intérieur du pneumatique en cas de crevaison de ce dernier, puis polymérisent et se solidifient, sous l'action de la pression de l'air, en obstruant ainsi tous les orifices et notamment l'entrée d'air du capteur de pression. En outre, lors de la fabrication du capteur, la résine d'enrobage et de protection est coulée sous la forme d'un liquide à très faible viscosité, de sorte que si l'étanchéité du plan de joint entre la carte de circuit imprimé et la cheminée et du plan de joint entre la carte de circuit imprimé et le capteur est insuffisante, l'entrée d'air risque également d'être obstruée par la résine.

Bref, il existe un risque non négligeable de pollution, voire d'obstruction, de l'entrée d'air du capteur de pression avec les modules de mesure de pression de l'art antérieur. La présente invention vise à pallier cet inconvénient.

A cet effet, l'invention concerne un module de mesure de pression de pneumatique comprenant un capteur de pression d'air, avec une entrée d'air, et un filtre anti-pollution de protection de l'entrée d'air, caractérisé par le fait que le capteur est monté sur une carte support de circuit imprimé, le filtre s'étend à travers ladite carte et il est prévu une surface de contact entre le filtre et le capteur constituant une unique surface de joint d'étanchéité contribuant à l'étanchéité de l'entrée d'air.

Grâce au filtre, on interdit le passage d'impuretés et de liquides vers l'entrée d'air du capteur et on réduit le nombre de surfaces de joint d'étanchéité par rapport aux modules de mesure de pression de l'art antérieur. Le filtre participant à l'étanchéité a, de ce fait, une fonction d'étanchéité.

Dans une forme de réalisation préférée, le filtre est fixé au capteur par un collage d'étanchéité.

De préférence encore, le filtre est externe au capteur.

Avantageusement, le capteur et une partie du filtre sont noyés dans une résine d'enrobage et de protection qui fait fonction de tirant assurant la mise en appui du filtre contre le capteur.

Lors de la fabrication du capteur, on met en appui le filtre contre le capteur, sous l'action d'un ressort de poussée, et on injecte la résine sous forme liquide. Après solidification de la résine et retrait du ressort, la résine solidifiée maintient l'effort de pression assurant ainsi l'appui du filtre contre le capteur. Grâce à cela, on améliore encore l'étanchéité de la jonction entre le filtre et le capteur.

Avantageusement encore, le filtre est en matière hydrophobe.

De préférence enfin, le filtre présente une surface libre convexe d'admission d'air.

La forme convexe de la surface d'admission d'air du filtre contribue à chasser les impuretés, en favorisant leur éjection par force centrifuge, et permet en outre un nettoyage facile de la surface d'admission d'air, par simple grattage.

L'invention sera mieux comprise à l'aide de la description suivante d'une forme de réalisation particulière du module de mesure de pression de l'invention, en référence au dessin annexé sur lequel:

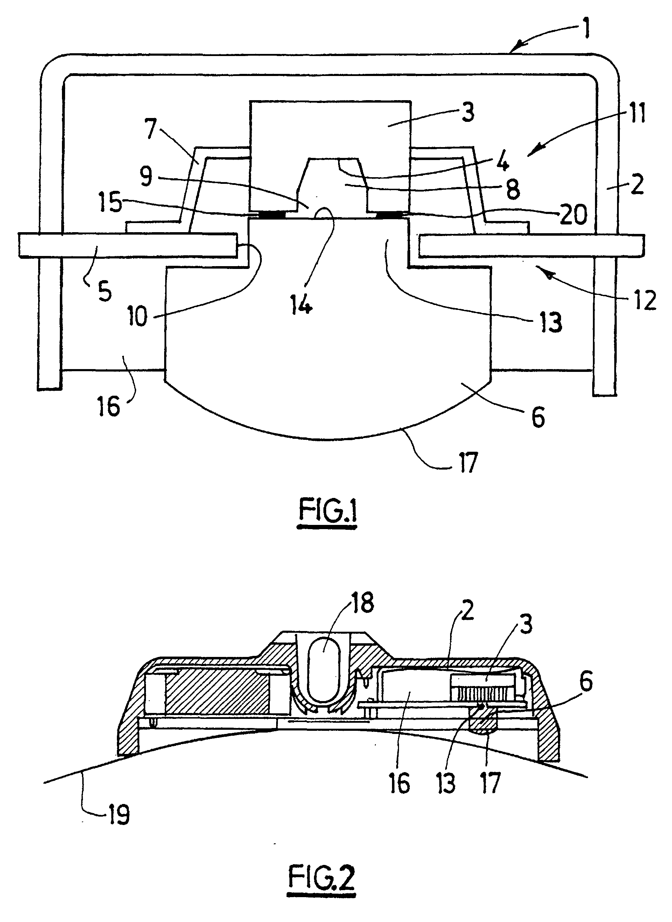

- la figure 1 représente une vue latérale du module de mesure de pression de pneu, selon la forme de réalisation particulière, et
- la figure 2 représente une vue en coupe latérale du module de la figure 1 monté sur une jante de pneumatique.

Dans l'exemple particulier de la description, le module 1 de mesure de pression de pneumatique est destiné à mesurer la pression de l'air à l'intérieur d'un pneumatique de véhicule automobile.

Le module 1 comprend, dans un boîtier 2, un capteur 3 de mesure de pression d'air, avec une entrée d'air 4, une carte 5, ici en cuivre, supportant un circuit imprimé, et un filtre anti-pollution 6 de protection de l'entrée d'air 4, externe au capteur 3.

Le capteur 3, disposé d'un côté 11 de la carte 5, est monté sur celle-ci et connecté au circuit imprimé, par des pattes de fixation et de connexion 7. L'entrée d'air 4 s'étend au fond d'une cavité 8, ménagée dans le capteur 3 et ouverte du côté de la carte 5, par une ouverture 9 située au droit d'une ouverture traversante 10, de passage du filtre anti-pollution 6, ménagée dans la carte 5.

Le filtre 6 s'étend en partie du côté 12 de la carte 5, opposé au côté 11, et au travers de la carte 5, par un prolongement 13 reçu dans l'ouverture 10. Le prolongement 13 présente une surface d'extrémité 14, ici plane, collée (20) sur une surface 15 du capteur 3, s'étendant dans le plan de l'ouverture 9 et entourant celle-ci. Le filtre 6 obstrue ainsi l'ouverture 9 du capteur 3 par son prolongement 13.

Le filtre anti-pollution 6 est constitué en matière plastique microporeuse, en l'espèce de la marque protégée "Porex", rendue hydrophobe. Il a pour fonction de filtrer l'air, autrement dit de laisser passer l'air à travers lui et d'empêcher le passage de liquides et d'impuretés.

Le collage 20 entre le capteur 3 et le filtre 6 assure l'étanchéité de la jonction entre ces deux éléments 3 et 6. La jonction capteur 3 / filtre 6 empêche le passage de liquides et d'impuretés vers l'entrée d'air 4. On soulignera ici que la surface de contact entre le capteur 3 et le filtre 6 constitue l'unique surface de joint d'étanchéité du module 1 contribuant à l'étanchéité de l'entrée d'air 4 du capteur 3. Le filtre 6, qui participe à l'étanchéité de l'entrée d'air 4 du capteur 3, a de ce fait une fonction d'étanchéité.

Le capteur 3, la carte 5 et une partie du filtre 6 sont noyés dans une résine 16 d'enrobage et de protection, anti-vibration.

Le filtre 6 présente une surface libre 17 d'admission d'air, opposée à la surface d'extrémité 14, non noyée dans la résine 16 et en contact avec de l'air dont la pression est égale à celle à l'intérieur du pneumatique. La surface 17 est de forme convexe, ce qui contribue à chasser les impuretés par force centrifuge et rend plus facile son nettoyage par simple grattage.

Une valve d'admission d'air 18, fixée sur une jante 19 du pneumatique, est solidaire du module 1 et fait communiquer l'intérieur du pneumatique et le milieu environnant le module 1, de façon à ce que la pression de l'air autour du module 1 soit égale à celle à l'intérieur du pneumatique.

Lors de la fabrication du module 1, après montage du capteur 3 sur la carte 5 et collage du filtre 6 sur le capteur 3, on force la mise en appui du filtre 6 contre le capteur 3, sous l'action de poussée d'un ressort, et on coule la résine 16 sous forme liquide. Pendant le coulage de la résine 16, le filtre 6 et la surface de joint d'étanchéité entre le capteur 3 et le filtre 6 assurent l'étanchéité de l'entrée d'air 4 et empêchent donc le passage de la résine liquide 16 vers l'entrée d'air 4. On maintient la pression sur le filtre 6 jusqu'à solidification de la résine 16, puis on cesse la mise en appui forcée en retirant le ressort. La résine solidifiée 16 fait alors fonction de tirant. maintenant et assurant la mise en appui du filtre 6 contre le capteur 3.

En fonctionnement, de l'air environnant le module 1 pénètre dans le capteur 3 par l'entrée d'air 4, après passage à travers la surface d'admission 17 puis à travers le filtre anti-pollution 6. Le filtre 6 filtre l'air et empêche d'éventuels liquides et impuretés d'arriver jusqu'à l'entrée d'air 4.

## Revendications

1. Module de mesure de pression de pneumatique comprenant un capteur de pression d'air (3), avec une entrée d'air (4), et un filtre anti-pollution (6) de protection de l'entrée d'air (4), **caractérisé par le fait que** le capteur (3) est monté sur une carte (5) support de circuit imprimé, le filtre (6) s'étend à travers ladite carte (5) et il est prévu une surface de contact (14, 15) entre le filtre (6) et le capteur (3) constituant une unique surface de joint d'étanchéité contribuant à l'étanchéité de l'entrée d'air (4).

2. Module selon la revendication 1, dans lequel le filtre (6) est fixé au capteur (3) par un collage d'étanchéité (20).

3. Module selon l'une des revendications 1 et 2, dans lequel le filtre (6) est externe au capteur (3).

4. Module selon l'une des revendications 1 à 3, dans lequel le capteur (3) et une partie du filtre (6) sont noyés dans une résine (16) d'enrobage et de protection qui fait fonction de tirant assurant la mise en appui du filtre (6) contre le capteur (3).

5. Module selon l'une des revendications 1 à 4, dans lequel dans lequel le filtre (6) est en matière hydrophobe.

6. Module selon l'une des revendications 1 à 5, dans lequel le filtre (6) présente une surface libre convexe d'admission d'air (17).

7. Module selon l'une des revendications 1 à 6, le filtre (6) est en matière microporeuse.

## Claims

1. Module for measuring pneumatic tyre pressure comprising an air pressure sensor (3), with an air intake (4) and an anti-pollution filter (6) protecting the air intake (4), **characterised by** the fact that the sensor (3) is mounted on a printed circuit card support (5), the filter (6) extends through said card (5) and a contact surface (14, 15) is provided between the filter (6) and the sensor (3) forming a single sealing joint surface contributing to the tight seal of the air intake (4).

2. Module according to claim 1, wherein the filter (6) is fixed to the sensor (3) by a sealing adhesive bond (20).

3. Module according to one of claims 1 and 2, wherein the filter (6) is external to the sensor (3).

4. Module according to one of claims 1 to 3, wherein the sensor (3) and a portion of the filter (6) are embedded in a protective encapsulation resin (16) which acts as a stay providing support for the filter (6) against the sensor (3).

5. Module according to one of claims 1 to 4, wherein the filter (6) is formed from hydrophobic material.

6. Module according to one of claims 1 to 5, wherein the filter (6) has a free, convex air admission surface (17).

7. Module according to one of claims 1 to 6, wherein the filter (6) is formed from microporous material.

## Patentansprüche

1. Reifendruckmeßmodul mit einem einen Lufteinlaß (4) aufweisenden Luftdruckfühler (3) und einem gegen Verschmutzung wirkenden Filter (6) zum Schutz des Lufteinlasses (4), **dadurch gekennzeichnet, daß** der Fühler (3) auf einer eine gedruckte Schaltung aufweisenden Trägerplatte (5) befestigt ist, daß sich das Filter (6) durch die Platte (5) hindurch erstreckt und daß zwischen dem Filter (6) und dem Fühler (3) eine Kontaktfläche (14, 15) vorgesehen ist, die eine einzige Dichtungsfläche darstellt, die zur Dichtheit des Lufteinlasses (4) beiträgt.

2. Modul nach Anspruch 1, wobei das Filter (6) mit Hilfe einer Klebedichtung (20) an dem Fühler (3) befestigt ist.

3. Modul nach Anspruch 1 oder 2, wobei das Filter (6) außerhalb des Fühlers (3) angeordnet ist.

4. Modul nach einem der Ansprüche 1 bis 3, wobei der Fühler (3) und ein Teil des Filters (6) in ein Harz (16) zur Umhüllung und zum Schutz eingebettet sind, das als Zugelement dient und die Anlage des Filters (6) an dem Fühler (3) sicherstellt.

5. Modul nach einem der Ansprüche 1 bis 4, wobei das Filter (6) aus hydrophobem Material besteht.

6. Modul nach einem der Ansprüche 1 bis 5, wobei das Filter (6) eine konvexe freie Fläche (17) für den Luftzutritt aufweist.

7. Modul nach einem der Ansprüche 1 bis 6, wobei das Filter (6) aus mikroporösem Material besteht.
